(19) Europäisches Patentamt
European Patent Office
Office européen des brevets

(11) **EP 3 165 474 A1**

(12) **EUROPEAN PATENT APPLICATION**
published in accordance with Art. 153(4) EPC

(43) Date of publication:
**10.05.2017 Bulletin 2017/19**

(51) Int Cl.:
**B65D 1/02** *(2006.01)*     **B65D 1/00** *(2006.01)*

(21) Application number: **15815259.5**

(86) International application number:
**PCT/JP2015/069075**

(22) Date of filing: **01.07.2015**

(87) International publication number:
**WO 2016/002862 (07.01.2016 Gazette 2016/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **01.07.2014 CN 201420361292 U**

(71) Applicant: **Yupo Corporation
Tokyo 101-0062 (JP)**

(72) Inventors:
• **FUNATO Takashi
Tokyo 101-0062 (JP)**
• **OCHIAI Katsumi
Tokyo 101-0062 (JP)**
• **UEDA Takahiko
Kamisu-shi
Ibaraki 314-0102 (JP)**

(74) Representative: **Zimmermann & Partner
Patentanwälte mbB
Josephspitalstr. 15
80331 München (DE)**

(54) **LABELED BLOW MOLDED CONTAINER AND MOLD FOR BLOW MOLDING**

(57)     The present invention provides a labeled blow-molded container having a convex portion and/or a concave portion on a label face, and a blow molding mold. The labeled blow-molded container of the present invention including a blow-molded container containing a thermoplastic resin; and a label containing a thermoplastic resin film, the labeled blow-molded container being formed by the blow-molded container being thermally fused to a label; a label face of the container to which the label is affixed having a convex portion and/or a concave portion; and a height difference (h) representing a distance between the highest part of the label surface and the lowest part of the label surface being not less than 0.3 mm using the label face as a reference in a height direction.

[FIG. 3]

EP 3 165 474 A1

**Description**

Technical Field

The present invention relates to a blow-molded container having a label formed into a three-dimensional shape, and a mold suitable for producing the blow-molded container.

Background Art

One method of displaying a label on the outer peripheral surface of a blow-molded container is a method of installing a label on the inner wall surface of a mold, closing the mold, and performing blow molding to obtain a labeled blow-molded container (called an "in-mold blowing method" hereafter).

For example, Japanese Unexamined Patent Application Publication No. 2012-180096A (Patent Document 1) or Japanese Unexamined Patent Application Publication No. 2011-246194A (Patent Document 2) discloses forming a labeled blow-molded container into a three-dimensional shape from the perspective of preventing the deformation of the labeled blow-molded container or imparting the container with a design.

In addition, Japanese Unexamined Patent Application Publication No. 2001-48146A (Patent Document 3) discloses a cylindrical hollow container having a knob-like protrusion (see FIGS. 8 and 25A).

Citation List

Patent Literature

Patent Document 1: Japanese Unexamined Patent Application Publication No. 2012-180096A
Patent Document 2: Japanese Unexamined Patent Application Publication No. 2011-246194A
Patent Document 3: Japanese Unexamined Patent Application Publication No. 2001-48146A

Summary of Invention

Technical Problem

However, when a label is disposed so as to cover a large protrusion as described in Patent Document 3, the label cannot conform to the shape of the mold, which may cause the label to rise up from the container or to be torn, or the protrusion may not appear on the container.

In response to the inadequacies of current technology described above, the present invention solves the technical problems and provides a labeled blow-molded container having a convex portion and/or a concave portion on a label face, and a blow molding mold.

Solution to Problem

A first aspect of the present invention provides a labeled blow-molded container including:

a blow-molded container containing a thermoplastic resin; and
a label containing a thermoplastic resin film,
the labeled blow-molded container being formed by the blow-molded container being thermally fused to the label;
a label face of the container to which the label is affixed having a convex portion and/or a concave portion; and
a height difference h representing a distance between a highest part of the label surface and a lowest part of the label surface being not less than 0.3 mm using the label face as a reference in a height direction.

According to a second aspect, a maximum angle of inclination $\theta^1$ formed by the label face and a tangent of a side surface of the convex portion is not less than 85° and not greater than 170° in the first aspect.

According to a third aspect, a maximum angle of inclination $\theta^2$ formed by the label face and a tangent of a side surface of the concave portion is not less than 190° and not greater than 275° in the first or second aspect.

According to a fourth aspect, a thickness of the label measured by method A of JIS K 7130:1999 is from 20 to 200 $\mu$m in any one of the first through third aspects.

According to a fifth aspect, the thermoplastic resin film is an unstretched film in any one of the first through fourth aspects.

According to a sixth aspect, the thermoplastic resin film is a biaxially stretched film in any one of the first through fourth aspects.

A seventh aspect is the labeled blow-molded container according to any one of the first through sixth aspects, wherein the label contains at least one layer formed from at least one resin selected from the group consisting of polyolefin-based resins and polyester-based resins.

An eighth aspect is the labeled blow-molded container according to any one of the first through seventh aspects, wherein the thermoplastic resin contained in the blow-molded container is one or more types selected from the group consisting of polyolefin-based resins, polyester-based resins, polycarbonate-based resins, and polystyrene-based resins.

According to a ninth aspect, the label has printing information in any one of the first through eighth aspects.

According to a tenth aspect, the printing information is formed by an oil-based ink or a radiation-curable ink in the ninth aspect.

According to an eleventh aspect, the printing information is formed with an amount of ink of from 0.5 to 6 $g/m^2$ in terms of solid printing in the ninth or tenth aspect.

In addition, a twelfth aspect of the present invention provides a blow molding mold having a cavity; the blow molding mold having a convex portion and/or a concave portion in a part of an inner wall surface of the mold in contact with the label; and a height difference H indicating a distance between a highest part of the inner wall surface and a lowest part of the inner wall surface being not less than 0.3 mm using a direction perpendicular to the inner wall surface as a reference in a height direction.

According to a thirteenth aspect, the blow molding mold in the twelfth aspect is used to form a labeled blow-molded container formed by a blow-molded container containing a thermoplastic resin being thermally fused to a label containing a thermoplastic resin film.

Advantageous Effects of Invention

The present invention can inhibit a label from rising up from a container or being torn.

Brief Description of Drawings

FIG. 1 is a cross-sectional view of a label face of a labeled blow-molded container having a convex portion on the label face.
FIG. 2 is a cross-sectional view of a label face of a labeled blow-molded container having a concave portion on the label face.
FIG. 3 is a cross-sectional view of a label face of a labeled blow-molded container having a convex portion and a concave portion on the label face.
FIG. 4 is a cross-sectional view of a blow molding mold.
FIG. 5 is a cross-sectional view of an inner wall surface of a mold used in the working examples.

Description of Embodiments

A specific method of implementing the present invention will be described in further detail hereinafter with reference to the drawings.

Note that in this specification, "parts by mass" refers to "parts by weight".

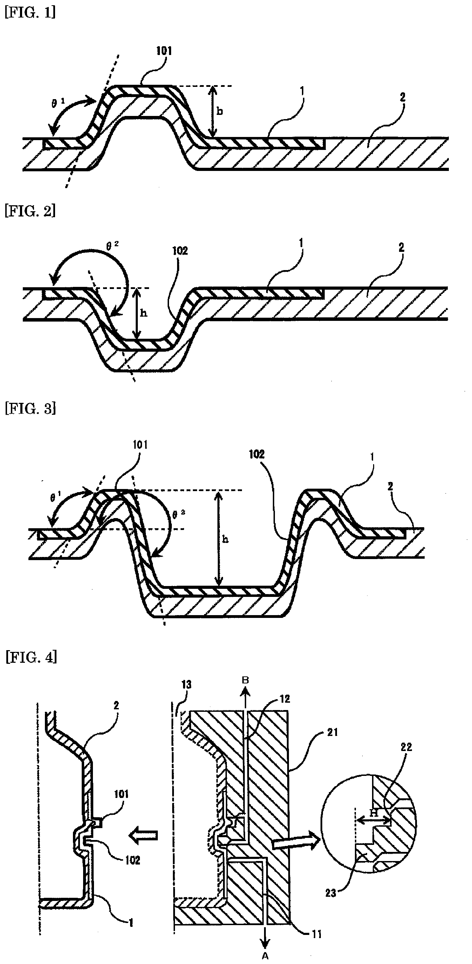

As illustrated in FIGS. 1 to 3, the labeled blow-molded container of the present invention is formed by a blow-molded container 2 containing a thermoplastic resin being thermally fused to a label 1 containing a thermoplastic resin film.

The blow-molded container has a convex portion 101 and/or a concave portion 102 in a location where the label 1 is affixed (called the "label face" hereafter).

A height difference h indicating the distance between the highest part of the surface of the label 1 and the lowest part of the surface of the label 1 is not less than 0.3 mm using the label face as a reference in the height direction.

The blow-molded container 2 contains a thermoplastic resin.

A material with which a hollow container can be molded is used as the thermoplastic resin. Ordinarily, a thermoplastic resin is used, examples of which include polyethylene terephthalate (PET) or copolymers thereof, polyolefin-based resins such as polypropylene (PP), and polyethylene (PE), polycarbonate resins, and the like. Of these, it is preferable to use one or more resins selected from polyolefin-based resins, polyester-based resins, polycarbonate-based resins, and polystyrene-based resins in that these resins can be easily blow-molded. In addition, it is preferable to use thermoplastic resin compositions which use these thermoplastic resins as main components and also contain various additives.

The label 1 contains a thermoplastic resin film. The thermoplastic resin film may use any material, structure, or production method as long as a labeled blow-molded container can be molded by inserting the label into a mold and infusing a molten thermoplastic resin composition into the mold.

The thermoplastic resin film may have a single-layer structure or may have a multilayer structure of two or more layers.

Examples of the thermoplastic resin contained in a thermoplastic resin film include polyolefin-based resins such as polyethylene and polypropylene; polystyrene-based resins; polyester-based resins such as polyethylene terephthalate (PET) and polylactic acid; polyamide-based resins such as nylon-6; and polycarbonate-based resins. One type or two or more types of these resins may be mixed and used.

Of these thermoplastic resins, it is preferable to use a polyolefin-based resin or a polyester-based resin, and it is preferable to use a polyolefin-based resin from the perspective of imparting excellent processability to the film.

In addition, the thermoplastic resin film preferably contains at least one layer formed from at least one resin selected from the group consisting of polyolefin-based resins and polyester-based resins, and the thermoplastic resin film more preferably contains at least one layer made of a polyolefin-based resin film.

Furthermore, a laminate of different types of materials such as a biaxially stretched PET/unstretched polypropylene (CPP) film or a biaxially stretched PET/biaxially stretched polypropylene (BOPP) film may be used.

The thermoplastic resin film preferably contains an inorganic fine powder in addition to the thermoplastic resin. When the thermoplastic resin film contains an inorganic fine powder, it is possible to achieve the whitening and opacification of the label 1 and to enhance the visibility of printing provided on the label 1.

Calcium carbonate, talc, and titanium oxide are preferable as types of inorganic fine powders from the perspectives of whitening, opacification, and resin formability.

The surfaces of these inorganic fine powders may be subjected to hydrophilization treatment or hydrophobization treatment in advance.

The particle size of the inorganic fine powder is expressed by the volume average particle size measured with a laser diffraction method, and the volume average particle size is ordinarily not less than 0.01 $\mu$m and preferably not less than 0.1 $\mu$m from the perspective of achieving the whitening and opacification of the label 1. On the other hand, from the perspective of enhancing the appearance of the label 1, the particle size is ordinarily not greater than 15 $\mu$m and preferably not greater than 5 $\mu$m.

From the perspective of increasing the opacity or whiteness of the label 1, the label 1 preferably contains an inorganic fine powder in an amount of not less than 1 mass% and more preferably not less than 5 mass%. On the other hand, from the perspective of stretching stability during production of the label 1, the label 1 preferably contains an inorganic fine powder in an amount of not greater than 25 mass% and more preferably not greater than 20 mass%.

The label 1 is preferably provided with an adhesive layer for enhancing the adhesion with the blow-molded container 2.

The adhesive layer has a function of affixing the label 1 to the blow-molded container 2. The adhesive layer is ordinarily made of a resin composition containing a thermoplastic resin having a lower melting point than the melting point of the thermoplastic resin constituting the label 1 as a main component.

Specific examples of the thermoplastic resin used in the adhesive layer include ultra-low-density, low-density, or medium-density high pressure processed polyethylenes, liner low-density polyethylene, ethylene/vinylacetate copolymers, maleic acid-modified ethylene/vinyl acetate copolymers, ethylene/acrylic acid copolymers, ethylene/alkyl acrylate ester polymers in which the alkyl group has from 1 to 8 carbons, ethylene/alkyl methacrylate ester copolymers in which the alkyl group has from 1 to 8 carbons; propylene-based resins such as propylene/$\alpha$-olefin copolymers, polyester-based resins, styrene-based elastomer resins, and polyamide-based resins.

When an adhesive layer is provided on the label 1, the adhesive layer may be provided by means of coextrusion at the time of the production of the thermoplastic resin film, by means of extrusion and lamination in the process of producing the thermoplastic resin film, or by forming a thermoplastic resin composition serving as an adhesive layer into a film and then affixing the adhesive layer to a thermoplastic resin film serving as a substrate.

In addition, the adhesive layer may be provided by dissolving the thermoplastic resin used in the adhesive layer in an organic solvent, applying the composition with a comma coater, a gravure coater, or the like, and drying the composition, or the adhesive layer may be provided by preparing the thermoplastic resin used in the adhesive layer as an aqueous emulsion, applying an aqueous coating containing the aqueous emulsion with a gravure coater or the like, and then drying the composition.

The adhesive layer face of the label 1 is preferably embossed in order to rapidly remove the air between the label 1 and the blow-molded container 2 so as to prevent air bubbles (blisters) from being formed.

The thermoplastic resin film contained in the label 1 may be an unstretched layer, a uniaxially stretched layer, or a biaxially stretched layer. Of these, an unstretched layer is preferable from the perspective of enhancing the formability of the convex portion or concave portion provided on the label face of the blow-molded container. When the thermoplastic resin film is an unstretched layer, the thermoplastic resin film contains titanium oxide in an amount of preferably from 0.5 to 10 mass% and more preferably from 1 to 5 mass% from the perspective of increasing the whiteness.

When the thermoplastic resin film is a uniaxially stretched layer, the design is preferably provided with directivity.

When the thermoplastic resin film is a biaxially stretched layer, from the perspective of enhancing the formability of the convex portion or concave portion provided on the label face, it is important to ensure that the stretching ratio is not too high in order to leave room for stretching, and the area stretching ratio (machine-direction stretching ratio × transverse-direction stretching ratio) is preferably not greater than 50 and more preferably not greater than 40.

In addition, from the perspective of enhancing the whiteness and opacity of the thermoplastic resin film, the stretching ratio of the thermoplastic resin film is preferably not less than 4 and more preferably not less than 9. Furthermore, when it is necessary to increase the whiteness of the thermoplastic resin film, the thermoplastic resin film is preferably a stretched film containing an inorganic fine powder in an amount of not less than 15 mass% and preferably not less than 20 mass%.

The label 1 may be provided with printing information. A typical configuration is one in which printing is implemented on one face of the label 1 and an adhesive layer is provided on the other face of the label 1. When providing printing information, a recording layer suited to printing may be provided on the surface of the label 1, and printing information may be provided via the recording layer.

Methods for providing printing information on the label 1 include silkscreen printing, gravure printing, offset printing, flexographic printing, various types of inkjet printing, digital printing, and the like. Of these, silkscreen printing or UV inkjet printing, which allows ink to be applied thickly in order to be able to withstand stress, is preferable since the ink layer is easily broken due to stretching stress at the time of molding.

An oil-based ink or radiation-curable ink is preferable as the ink used to form printing information. When a radiation-curable ink is used, it is preferable to use visible light, ultraviolet rays, or an electron beam as radiation. In addition, when the cured ink is too hard, the ink layer tends to break easily due to stretching stress at the time of molding, so the dose of radiation may be adjusted.

The printing information is preferably formed with an amount of ink of from 0.5 to 6 $g/m^2$ in terms of solid printing. The amount of ink is more preferably not less than 1 $g/m^2$ and even more preferably not less than 1.5 $g/m^2$. In addition, the amount of ink is more preferably not greater than 5.5 $g/m^2$ and even more preferably not greater than 5 $g/m^2$.

Furthermore, the surface of the label 1 may also be decorated. Examples of decoration methods include the affixing of a deposition film, foil stamping, holograms, and the like.

When the label 1 is provided with printing information or is decorated, a recording layer may be provided by coating after the surface of the thermoplastic resin film is subjected to oxidation treatment, and printing information or decoration may be provided thereon.

Examples of surface oxidation treatment include corona discharge treatment, frame treatment, plasma treatment, glow discharge treatment, and ozone treatment.

An example of a method for providing a recording layer is a method of applying a surface treatment solution containing at least an antistatic agent and a polymer binder and then drying as necessary.

The thickness of the label 1 obtained in this way is preferably not less than 20 μm, more preferably not less than 30 μm, and even more preferably not less than 45 μm from the perspective of the stable forming of the film. In addition, the thickness of the label 1 is preferably not greater than 200 μm, more preferably not greater than 180 μm, and even more preferably not greater than 160 μm so that the label conforms to the shape of the mold. The thickness of the label 1 is determined by means of measurement using a constant-pressure thickness measurement instrument on the basis of method A of "Plastic Film and Sheets - Methods for Measuring Thickness" of JIS K 7130:1999.

In addition, from the perspective of providing the label 1 with whiteness and opacity, the porosity of the label 1 is preferably not less than 2% and more preferably not less than 10%. On the other hand, when the porosity is too high, the label 1 may become clear at the time of the molding of the labeled blow-molded container, or the formability of the convex portion or concave portion on the label face may be reduced, so the porosity of the label 1 is preferably not greater than 60% and more preferably not greater than 50%.

The porosity of the label 1 is calculated with the following formula using the density $\rho$ of the label 1 and the true density $\rho_0$ of the resin composition used in the forming of the label 1.

$$\text{Porosity (\%)} = (\rho_0 - \rho)/\rho_0$$

$\rho_0$: true density of the thermoplastic resin composition
$\rho$: density of the label

Here, the true density $\rho_0$ is determined by a water displacement method from a pressed sheet of the thermoplastic resin composition used in the label 1 on the basis of method A of "Plastics - Methods for Measuring the Density and Specific Gravity of Non-Foaming Plastics" of JIS K 7112:1999.

In addition, the density $\rho$ of the label 1 is determined by dividing the basis weight of the label 1 by the thickness of the label 1.

Here, the basis weight of the label 1 is determined by dividing the mass, which is obtained by weighing a sample punched out to a size of 100 mm $\times$ 100 mm with an electronic balance, by the area on the basis of "Paper and Paperboard - Method for Measuring Weight" of JIS P 8124:2011.

The labeled blow-molded container is formed by the blow-molded container 2 being thermally fused to the label 1. Furthermore, the labeled blow-molded container has a convex portion and/or a concave portion on the label face to which the label 1 is affixed.

A height difference h indicating the distance between the highest part of the surface of the label 1 and the lowest part of the surface of the label 1 is not less than 0.3 mm using the label face as a reference in the height direction. The height difference h is preferably not less than 0.5 mm and more preferably not less than 1 mm. The upper limit of the height difference h is not particularly limited but is preferably not greater than 20 mm and more preferably not greater than 10 mm from the perspective of the conformity of printing or a decorative layer such as a foil.

Furthermore, the labeled blow-molded container has a convex portion and/or a concave portion on the label face thereof. As illustrated in FIGS. 1 to 3, the maximum angle of inclination $\theta^1$ formed by the label face and a tangent of a side surface of the convex portion provided on the label face is greater than 0° and less than 180°. In addition, the maximum angle of inclination $\theta^2$ formed by the label face and a tangent of a side surface of the concave portion provided on the label face is greater than 180° and less than 360°.

Here, when the labeled blow-molded container has a convex portion, the maximum angle of inclination $\theta^1$ is preferably not less than 85°, more preferably not less than 90°, and even more preferably not less than 95°. In addition, the maximum angle of inclination $\theta^1$ is preferably not greater than 170°, more preferably not greater than 160°, and even more preferably not greater than 150°. When the maximum angle of inclination $\theta^1$ is within the ranges described above, it becomes easy to remove the labeled blow-molded container from the mold after the molding of the labeled blow-molded container, and the three-dimensional effect of the resulting labeled blow-molded container may be accentuated at the same time.

On the other hand, when the labeled blow-molded container has a concave portion, the maximum angle of inclination $\theta^2$ is preferably not less than 190°, more preferably not less than 200°, and even more preferably not less than 210°. In addition, the maximum angle of inclination $\theta^2$ is preferably not greater than 275°, more preferably not greater than 270°, and even more preferably not greater than 265°. When the maximum angle of inclination $\theta^2$ is within the ranges described above, it becomes easy to remove the labeled blow-molded container from the mold after the molding of the labeled blow-molded container, and the three-dimensional effect of the resulting labeled blow-molded container is also simultaneously accentuated.

Note that the maximum angle of inclination is determined by cutting the label face so as to travel across the convex portion or concave portion provided on the label surface, observing the cross section thereof with an optical microscope, and analyzing the observed image, or by observing the convex portion or concave portion provided on the label surface directly with a laser displacement meter. In addition, when one labeled blow-molded container may have a plurality of angles of inclination of convex portions, the maximum angle of inclination closest to 90° is used as the maximum angle of inclination $\theta^1$. Similarly, when one labeled blow-molded container may have a plurality of angles of inclination of concave portions, the maximum angle of inclination closest to 270° is used as the maximum angle of inclination $\theta^2$.

The present invention provides a blow molding mold having a cavity suitable for forming the aforementioned labeled blow-molded container obtained by the blow-molded container 2 containing a thermoplastic resin being thermally fused to the label 1 containing a thermoplastic resin film.

As illustrated in FIG. 4, the blow molding mold 21 of the present invention has a convex portion 23 and/or a concave portion 22 in a part of the inner wall surface in contact with the label. The concave portion 22 of the inner wall surface of the mold corresponds to the convex portion 101 of the blow-molded container, and similarly, the convex portion 23 of the inner wall surface of the mold corresponds to the concave portion 102 of the blow-molded container. The concave portion 22 and/or the convex portion 23 is provided so that the height difference H indicating the distance between the highest part of the inner wall surface and the lowest part of the inner wall surface is not less than 0.3 mm using the direction perpendicular to the inner wall surface of the blow molding mold as a reference in the height direction.

In order to ensure that ordinary in-mold molding is performed, a suction port 11 for holding the label at the label contact part of the wall surface is preferably provided in the mold, and air present between the label and the mold is preferably aspirated (direction A). The suction port 11 preferably has a diameter of not less than 0.3 mm from the perspective of aspirating air reliably. In addition, the suction port 11 preferably has a diameter of not greater than 0.6 mm from the perspective of making it unlikely for a trace of the suction port 11 to remain on the label surface.

Furthermore, an exhaust port 12 is preferably provided on the edge of the mold concave portion 22, whereby air is preferably discharged (arrow B). As a result, the label 1 is pulled into the mold concave portion 22, and the label 1 is then heated at the time of molding, which makes it easy for the label 1 to be stretched. This yields the effect that the formability of the convex portion 101 or the concave portion 102 provided on the label face of the labeled blow-molded container is enhanced. The exhaust port 12 preferably has a diameter of from 0.3 to 0.8 mm from the perspective of reliably discharging the air in the mold concave portion 22.

When forming the labeled blow-molded container, a label containing a thermoplastic resin film is formed via a process such as punching to produce an in-mold label, and this label is inserted into the mold of a blow molding machine and installed at a prescribed location inside the mold.

A typical method of individually picking in-mold labels out and inserting the labels into the mold of a blow molding machine is a method of collecting punched out labels as a bundle, placing the bundle in a label magazine, individually removing the in-mold labels from the label magazine using a robot having a suction disc (automatic label supplying device), inserting each label into the mold, and installing the mold at a prescribed position inside the mold. Examples of robots of this type that may be used include robots manufactured by Guangzhou xinbiao jidian keji Co., Ltd., Beijing shangling weiye shukong keji Co., Ltd., Zhangjiagangshi tongxing jixie Co., Ltd., Tianqi zidonghua jixie zhizao Co., Ltd." Tahara Co., Ltd., Star Seiki Co., Ltd., Sailor Co., Ltd., Yushin Precision Equipment Co., Ltd., and Pentel Co., Ltd.

When such a robot is not used, or at the time of the production of a prototype, the in-mold labels may be picked out one at a time by hand, and the label may be installed at a prescribed location inside the mold.

The in-mold label installed inside the mold is fixed to the inner wall of the mold using a known technique such as aspiration or static electricity so that the label does not become misaligned or does not fall down. Specifically, the label may be fixed to the inner wall of the mold by installing the in-mold label so that the printing face side of the label is in contact with the inner wall surface of the mold and then aspirating the label from the suction port provided in the mold. In addition, when inserting the in-mold label into the mold, the in-mold label may be charged by a charging device such as a charge bar or a pinner connected to a DC high-voltage generator, and the label may be fixed to the inner wall of the mold by static electricity.

Examples of blow molding methods that can be applied include a direct blowing method of extruding the required amount of hot parison, closing the mold, and then blowing; a stretch blowing method of molding a preform in advance by means of injection molding and then mechanically stretching the preform in the extrusion direction of the preform at a temperature slightly lower than the glass transition temperature of the thermoplastic resin; and an injection blowing method of molding a preform in advance by means of injection molding, moving the obtained preform to a blowing mold after first cooling the preform or without cooling the preform, closing the mold, and then blowing.

Preferable examples of the resin material used in the formation of the blow-molded container include polyolefin-based resins, polyester-based resins, polycarbonate-based resins, and polystyrene-based resins, as described above.

The resin material is preferably handled within the desired temperature range at the time of blow molding, and the temperature of the parison formed by melt-extruding the resin material immediately after being extruded from the mold is preferably not lower than 150°C, as in the case of the mold temperature. This temperature is more preferably within the range of from 150 to 250°C and even more preferably within the range of from 150 to 220°C. When the parison temperature is not lower than 150°C, the label can be thermally fused by sufficiently activating a heat seal layer on the in-mold. The parison temperature immediately after being extruded can be measured directly with a thermocouple thermometer or the like, or the temperature may be measured indirectly with an infrared thermometer or the like.

At the time of parison formation, the extruded amount of the resin material is preferably varied using a parison controller, and the thickness of the parison that is formed is preferably varied in accordance with the shape of the labeled blow-molded container that is to be ultimately obtained.

On the other hand, in order to enhance the production efficiency by rapidly cooling the molded blow-molded container, the mold of the blow molding machine is preferably cooled by installing a cooling tube inside the mold and circulating cooling water into the cooling tube. The cooling temperature of the mold when blow-molding the blow-molded container is set to 1 to 40°C. This temperature is preferably within the range of from 5 to 30°C and more preferably within the range of from 10 to 25°C. The mold can be cooled to a temperature lower than the freezing point when an antifreeze solution is used as the cooling water. However, when the cooling temperature is 1°C or higher, it is easy to increase the adhesive strength of the in-mold label and the blow-molded container without the mold being overcooled, and the rapid cooling of the blow-molded container to be molded can be avoided, which makes it unlikely for container deformations such as bulges or dents to occur. When the cooling temperature of the mold is 40°C or lower, the production efficiency of the blow-molded container is not diminished.

Here, the cooling temperature of the mold may be a numerical value determined by measuring the inner wall of the mold with a contact thermometer or the like, but the cooling temperature is ordinarily considered to be the same as the temperature as the cooling water circulated inside the mold, the cooling temperature of the mold may be interpreted as being the cooling water temperature.

Once the blow molding material is melt-extruded to form a parison of a prescribed length, the mold is closed.

Next, blow molding is performed by introducing pressurized air (also called "pressurized air") into the parison from a blowing air blow-inlet 13 so as to form a blow-molded container. The conditions at the time of blow molding are such that the blow pressure of the pressurized air is not less than 3 kg/cm$^2$. This pressure is more preferably within the range of from 3 to 30 kg/cm$^2$, even more preferably within the range of from 3 to 10 kg/cm$^2$, and particularly preferably within the range of from 4 to 6 kg/cm$^2$. When the blow pressure of the pressurized air is not less than 3 kg/cm$^2$, it is easy to increase the adhesive strength of the in-mold label and the blow-molded container, and blistering is unlikely to occur.

In addition, the conditions at the time of blow molding are preferably such that the blowing time (container molding time) using pressurized air is not less than 5 seconds. This time is preferably within the range of from 5 to 50 seconds and more preferably within the range of from 10 to 30 seconds. The blowing time using pressurized air may change depending on the size of the container. If the blowing time is reduced to increase the production efficiency, a substantial bias may arise in the thermal history of a member containing the label or the container due to high-temperature ejection, which tends to cause container deformations such as bulges or dents. When the blowing time using air pressure is not less than 5 seconds, it is possible to uniformly reduce the temperature of the labeled blow-molded container that is subsequently ejected to a prescribed level, and such container deformations are unlikely to occur.

After the blow-molded container is molded by blow molding, the mold is opened, and the labeled blow-molded container is ejected.

At this time, the ejection conditions are such that the temperature of the labeled blow-molded container immediately after ejection is not higher than 120°C. This temperature is more preferably within the range of from 60 to 110°C, more preferably within the range of from 70 to 100°C, and even more preferably within the range of from 80 to 90°C. When the temperature of the labeled blow-molded container at the time of ejection is not higher than 120°C, container deformations such as bulges or dents are unlikely to occur. In addition, since the blow-molded container is never ejected in a state that the thermoplastic resin of the heat seal layer of the label is in the molten state, the in-mold label never rises up or forms blisters after the cooling of the ejected labeled blow-molded container.

The time of the shot cycle, which includes the process from after the in-mold label is installed in the mold of the blow molding machine until the mold is opened and the labeled blow-molded container is removed, is preferably not less than 20 sec/cycle and is more preferably within the range of from 20 to 60 sec/cycle. In addition, the number of labeled blow-molded containers to be molded is preferably within the range of from 1 to 10 containers/cycle.

With the present invention, the labeled blow-molded container immediately after ejection tends to have an excellent appearance, with a convex portion and concave portion formed clearly and without any cracking of the decoration portion or blistering of the entire label. In addition, it also becomes easy to prevent blistering due to the rising up of the in-mold label from the labeled blow-molded container after cooling.

As a result, with the production method of the present invention, the obtained labeled blow-molded container is easily given an appearance with no visually observable defects such as blisters, which makes it possible to increase the product value of the labeled blow-molded container with a design formed by convex portions and concave portions.

Examples

Examples of the present invention will be described hereinafter, but the examples are merely examples, and the present invention is not limited thereto.

Label Production Examples

A two-layer biaxially stretched resin film including a biaxially stretched base layer (A) and a transverse-direction uniaxially stretched adhesive layer (B) was produced.

Label Production Example 1:

As the materials of the base layer (A), the materials shown in Table 1 below were mixed so that the PP-1 content was 64 mass%, the CA-1 content was 25 mass%, and the TI-1 content was 1 mass%. The mixture was supplied to an extruder set to 250°C and melt-kneaded inside the extruder.

The melted resin composition was supplied to a T-die set to 250°C and extruded into a sheet shape from the T-die. The sheet-shaped resin composition was cooled to approximately 60°C with a cooling roll to obtain an unstretched sheet. Next, the unstretched sheet was heated to 145°C, stretched four times in the machine direction utilizing the difference in circumferential speed of a group of rolls, and cooled to approximately 60°C with a cooling roll to obtain a uniaxially stretched sheet.

As the material of the adhesive layer (B), the PE-1 shown in Table 1 was melt-kneaded with an extruder set to 230°C.

The melted thermoplastic resin was extruded into a sheet shape from a T-die set to 230°C, and this thermoplastic resin was laminated on the uniaxially stretched sheet produced above and cooled to obtain a laminated resin sheet having a two-layer structure including a uniaxially stretched sheet/thermoplastic resin for an adhesive layer.

Next, after this laminated resin sheet was reheated to 160°C using a tenter oven and stretched nine times in the transverse direction using a tenter, annealing treatment was further performed on the sheet with a heat set zone adjusted to 160°C, and the sheet was then cooled to approximately 60°C with a cooling roll. The edges of the sheet were slit to obtain a two-layer stretched resin film including a biaxially stretched base layer (A)/uniaxially stretched adhesive layer (B), and this was used as the label of Production Example 1.

[Table 1]

Table 1: Raw materials used

| Type | Abbreviation code | Material | Trade name | Manufacturer | MFR (JIS K 7210:1999) | Melt peak temperature (JIS K 7121:1987) | Crystallization peak temperature (JIS K 7210:1999) | Density | Volume average particle size |
|---|---|---|---|---|---|---|---|---|---|
| Thermoplastic resin | PP-1 | Propylene homopolymer | NOVATEC-PP MA4 | Japan Polypropylene Corporation | 5 g/10 min | 167°C | - | - | - |
| | PE-1 | Metallocene-based polyethylene | Kernel KS571 | Japan Polyethylene Corporation | 12 g/10 min | 100°C | 89°C | 0.907 g/cm$^3$ | - |
| | PE-2 | High density polyethylene | NOVATEC-HD HB420R | Japan Polyethylene Corporation | 0.2 g/10 min | 133°C | 115°C | 0.956 g/cm$^3$ | - |
| Inorganic fine powder | CA-1 | Heavy calcium carbonate | Softon #1800 | Bihoku Funka Kogyo Co., Ltd., | - | - | - | - | 1.8 μm |
| | TI-1 | Rutile titanium dioxide | Taipaque CR-60 | Ishihara Sangyo Co., Ltd. | - | - | - | 0.2 | 0.2 μm |
| -: no data | | | | | | | | | |

Label Production Examples 2 to 4:

With respect to Production Example 1, the labels of Production Examples 2 to 4 were obtained in the same manner as in Production Example 1 with the exception that the thickness of the uniaxially stretched sheet was increased by increasing the extruded amount of the resin composition for the base layer (A) and widening the degree of opening of the T-die lip. The thickness of the base layer (A) differs in these labels, as shown in Table 2 below.

Label Production Example 5:

With respect to Production Example 1, the label of Production Example 5 having a thinner base layer (A) was obtained in the same manner as in Production Example 1 with the exception that the thickness of the uniaxially stretched sheet was reduced by reducing the extruded amount of the resin composition for the base layer (A) and narrowing the degree of opening of the T-die lip, and that the machine-direction stretching temperature was adjusted.

Label Production Example 6:

A two-layer uniaxially stretched resin film including a machine-direction uniaxially stretched base layer (A) and an unstretched adhesive layer (B) was produced.

As the materials of the base layer (A), the materials shown in Table 1 were mixed so that the PP-1 content was 95 mass% and the TI-1 content was 5 mass%. The mixture was supplied to an extruder set to 250°C and melt-kneaded inside the extruder.

The melted resin composition was supplied to a T-die set to 250°C and extruded into a sheet shape from the T-die. The sheet-shaped resin composition was cooled to approximately 60°C with a cooling roll to obtain an unstretched sheet. Next, the unstretched sheet was heated to 140°C, stretched five times in the machine direction utilizing the difference in circumferential speed of a group of rolls, and cooled to approximately 60°C with a cooling roll to obtain a uniaxially stretched sheet.

As the material of the adhesive layer (B), the PE-1 shown in Table 1 was melt-kneaded with an extruder set to 230°C.

The melted thermoplastic resin was extruded into a sheet shape from a T-die set to 230°C, and this thermoplastic resin was laminated on the uniaxially stretched sheet produced above and cooled to obtain a laminated resin sheet having a two-layer structure including a uniaxially stretched sheet/thermoplastic resin for an adhesive layer. This was used as the label of Production Example 6.

Label Production Example 7:

A two-layer unstretched resin film including an unstretched base layer (A) and an unstretched adhesive layer (B) was produced.

As the materials of the base layer (A), the materials shown in Table 1 were mixed so that the PP-1 content was 95 mass% and the TI-1 content was 5 mass%. The mixture was supplied to an extruder set to 250°C and melt-kneaded inside the extruder.

As the material of the adhesive layer (B), the PE-1 shown in Table 1 was melt-kneaded with a separate extruder set to 230°C.

The melted resin composition of the base layer (A) and the adhesive layer (B) was supplied to a T-die set to 250°C and extruded into a sheet shape from the T-die. The sheet-shaped resin composition was cooled to approximately 60°C with a cooling roll to obtain an unstretched sheet, and this was used as the label of Production Example 7.

Label Production Example 8:

With respect to Production Example 7, the label of Production Example 8 was obtained in the same manner as in Production Example 1 with the exception that the thickness of the base layer (A) was increased as shown in Table 2 by increasing the extruded amount of the resin composition for the base layer (A) and widening the degree of opening of the T-die lip.

Label Production Example 9:

As the materials of the base layer (A), the materials shown in Table 1 were mixed so that the PE-2 content was 64 mass%, the CA-1 content was 25 mass%, and the TI-1 content was 1 mass%. The mixture was supplied to an extruder set to 250°C and melt-kneaded inside the extruder.

The melted resin composition was supplied to a T-die set to 230°C and extruded into a sheet shape from the T-die. The sheet-shaped resin composition was cooled to approximately 45°C with a cooling roll to obtain an unstretched sheet. Next, the unstretched sheet was heated to 95°C, stretched four times in the machine direction utilizing the difference in circumferential speed of a group of rolls, and cooled to approximately 45°C with a cooling roll to obtain a uniaxially stretched sheet.

As the material of the adhesive layer (B), the PE-1 shown in Table 1 was melt-kneaded with an extruder set to 230°C.

The melted thermoplastic resin was extruded into a sheet shape from a T-die set to 230°C, and this thermoplastic resin was laminated on the uniaxially stretched sheet produced above and cooled to obtain a laminated resin sheet having a two-layer structure including a uniaxially stretched sheet/thermoplastic resin for an adhesive layer.

Next, after this laminated resin sheet was reheated to 100°C using a tenter oven and stretched eight times in the transverse direction using a tenter, annealing treatment was further performed on the sheet with a heat set zone adjusted to 160°C, and the sheet was then cooled to approximately 45°C with a cooling roll. The edges of the sheet were slit to obtain a two-layer stretched resin film including a biaxially stretched base layer (A)/uniaxially stretched adhesive layer (B), and this was used as the label of Production Example 9.

Label Production Example 10:

As the materials of the base layer (A), the materials shown in Table 1 were mixed so that the PE-2 content was 29 mass%, the CA-1 content was 70 mass%, and the TI-1 content was 1 mass%. The mixture was supplied to an extruder set to 250°C and melt-kneaded inside the extruder.

The melted resin composition was supplied to a T-die set to 230°C and extruded into a sheet shape from the T-die. The sheet-shaped resin composition was cooled to approximately 45°C with a cooling roll to obtain an unstretched sheet. Next, the unstretched sheet was heated to 95°C, stretched four times in the machine direction utilizing the difference in circumferential speed of a group of rolls, and cooled to approximately 45°C with a cooling roll to obtain a uniaxially stretched sheet.

As the material of the adhesive layer (B), the PE-1 shown in Table 1 was melt-kneaded with an extruder set to 230°C.

The melted thermoplastic resin was extruded into a sheet shape from a T-die set to 230°C, and this thermoplastic resin was laminated on the uniaxially stretched sheet produced above and cooled to obtain a laminated resin sheet having a two-layer structure including a uniaxially stretched sheet/thermoplastic resin for an adhesive layer. This was used as the label of Production Example 10.

For each of the labels of Production Examples 1 to 10, the thickness of the base layer (A) of the label, the thickness of the adhesive layer (B) of the label, the thickness of the entire label, and the label density were measured as follows, and the results are shown together in Table 2.

Thickness

The thickness of the labels obtained in the production examples described above was measured using a constant-pressure thickness measurement instrument (manufactured by Tecklock, instrument name: PG-01J) on the basis of "Plastic Film and Sheets - Methods for Measuring Thickness" of JIS K 7130:1999.

The thickness of each of the layers of the base layer (A) and the adhesive layer (B) constituting each of the labels described above was determined as follows: samples for cross-section measurement were created by cooling measurement samples to a temperature not higher than -60°C using liquid nitrogen and then placing them on a glass sheet, and cutting them at a perpendicular using a razor blade (trade name: Proline Blade, manufactured by Schick Japan Co., Ltd.). The obtained samples were observed at the cross-section using a scanning electron microscope (instrument name: JSM-6490, manufactured by JEOL, Ltd.) and the boundary lines for each thermoplastic resin composition were distinguished by structural appearance, and the overall thickness and the observed layer thickness ratio were calculated.

Density

The basis weight of the label obtained in each of the production examples described above was measured by weighing a sample punched out to a size of 100 mm $\times$ 100 mm with an electronic balance on the basis of "Paper and Paperboard - Method for Measuring Weight" of JIS P 8124:2011.

The density of the label obtained in each of the production examples described above was determined as a value found by dividing the basis weight obtained above by the thickness of the entire label obtained above.

[Table 2]

Table 2: In-mold label production examples

| | Production conditions | | | | | | | | Label physical properties | | | |
|---|---|---|---|---|---|---|---|---|---|---|---|---|
| | Base layer (A) | | | Adhesive layer (B) | Machine-direction stretching | | Transverse-direction stretching | | Base layer (A) thickness | Heat seal layer (B) thickness | Entire label thickness (t) | Density |
| | Resin (wt.%) | CA-1 (wt.%) | TI-1 (wt.%) | Resin (wt.%) | Temperature (C°) | Ratio (times) | Temperature (C°) | Ratio (times) | ($\mu$m) | ($\mu$m) | ($\mu$m) | (g/cm$^3$) |
| Production Example 1 | 64(PP-1) | 25 | 1 | 100 (PE-1) | 145 | 4 | 160 | 9 | 50 | 5 | 55 | 0.78 |
| Production Example 2 | 64(PP-1) | 25 | 1 | 100 (PE-1) | 145 | 4 | 160 | 9 | 80 | 5 | 85 | 0.78 |
| Production Example 3 | 64(PP-1) | 25 | 1 | 100(PE-1) | 145 | 4 | 160 | 9 | 150 | 5 | 155 | 0.76 |
| Production Example 4 | 64(PP-1) | 25 | 1 | 100(PE-1) | 145 | 4 | 160 | 9 | 250 | 5 | 255 | 0.75 |
| Production Example 5 | 64(PP-1) | 25 | 1 | 100(PE-1) | 140 | 5 | 160 | 9 | 15 | 5 | 20 | 0.80 |
| Production Example 6 | 95(PP-1) | 0 | 5 | 100(PE-1) | 140 | 5 | - | - | 30 | 5 | 35 | 0.93 |
| Production Example 7 | 95(PP-1) | 0 | 5 | 100(PE-1) | - | - | - | - | 150 | 5 | 155 | 0.95 |
| Production Example 8 | 95(PP-1) | 0 | 5 | 100(PE-1) | - | - | - | - | 185 | 5 | 190 | 0.95 |
| Production Example 9 | 64(PE-2) | 25 | 1 | 100(PE-1) | 95 | 4 | 100 | 8 | 125 | 5 | 130 | 0.68 |
| Production Example 10 | 29(PE-2) | 70 | 1 | 100(PE-1) | 95 | 4 | - | - | 125 | 5 | 130 | 0.75 |

Label printing

A prescribed ink was printed on a printing face of the label of each production example (opposite side as the adhesive layer (B)) with the following method using an RI tester (manufactured by Kokubo Seimitsu Co., Ltd., product name: model RI-2).
Oil-based ink printing: A synthetic paper ink (manufactured by T&K TOKA, product name: Best SP) was used, and after the ink was spread out to the volume shown in Table 3 with an RI tester, the ink was subjected to oxidation polymerization and dried.
UV ink printing: A UV-curable ink (manufactured by T&K TOKA, product name: BC161) was used, and after the ink was spread out to the volume shown in Table 3 below with an RI tester, the ink was irradiated with ultraviolet light and dried.

Production of a labeled hollow molded container

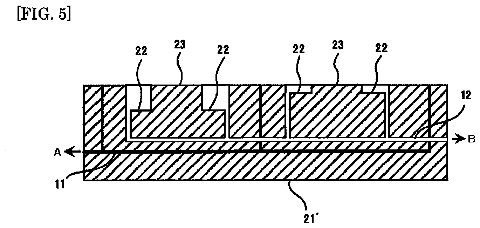

Convex portions 23 and concave portions 22 having the cross section illustrated in FIG. 5 were produced at the label insertion locations of a blow molding mold 21' having a 0.4 L cavity. Each of the combinations of convex portions 23 and concave portions 22 forms a concentric shape (crater) with an outside circumference of 15 mm, an inside circumference of 9 mm, and a width of 3 mm, and the engraving angle of the concave portions 22 was 90°. In addition, two craters were provided at the top and bottom of the inner wall of the mold, and the height difference H between the highest part of the inner wall surface and the lowest part of the inner wall surface was 3 mm in the upper crater and 1 mm in the lower crater. Furthermore, this mold can be temperature-controlled by water cooling.
The mold 21' was mounted on an in-mold blow molding machine, and the printing label produced in each of the production examples described above was inserted in a state in which the printing face was in contact with the inner wall of the mold. The printing label was then aspirated to fix the label.
Next, a thermoplastic resin (PE-2) was melted at 170°C as the material for the trunk part of the hollow molded container and extruded with a parison shape into a mold in which the cooling temperature is set to 20°C. After the mold was then clamped, compressed air of 2.94 MPa (30 kgf/cm$^2$) was fed into the parison, and the parison was expanded and adhered to the mold for 16 seconds to form a container and to simultaneously fuse the parison to the label. Next, the molded product was cooled inside the mold, and the mold was opened to obtain the labeled hollow molded containers of Working Examples 1 to 11 and Comparative Example 1.

Shape evaluation

Each of the hollow molded containers obtained in this manner was measured using a laser displacement meter (manufactured by Keyence Co., Ltd., trade name: LK-G85) so that the container passed through the central part of the convex portions and concave portions (craters) on the label face, and the height difference h, the maximum angle of inclination $\theta^1$ of the convex portions, and the maximum angle of inclination $\theta^2$ of the concave portions were determined. The results are shown together in Table 3.

Appearance evaluation

The appearance of the obtained hollow molded containers was observed by confirming the shape and the state of the printing face, and the results are shown in Table 3.

[Table 3]

Table 3: Working examples

| | Label | Printing | | Height difference | Maximum angle of inclination of convex portions | Maximum angle of inclination of concave portions | Appearance | |
|---|---|---|---|---|---|---|---|---|
| | | Ink | Volume | | | | | |
| | | | (g/m²) | (mm) | (°) | (°) | Label-laminated part | Printed part |
| Working Example 1 | Production Example 1 | Oil-based | 2 | 1.5 | 120 | 240 | Good | Good |
| Working Example 2 | Production Example 2 | Oil-based | 2 | 1 | 135 | 225 | Good | Good |
| Working Example 3 | Production Example 2 | UV | 2 | 1 | 135 | 225 | Ink cracking | Ink cracking |
| Working Example 4 | Production Example 3 | Oil-based | 2 | 0.5 | 160 | 200 | Good | Good |
| Working Example 5 | Production Example 5 | Oil-based | 2 | 3 | 90 | 270 | Clearing of base material | Reduction in concentration |
| Working Example 6 | Production Example 6 | Oil-based | 2 | 3 | 90 | 270 | Good | Good |
| Working Example 7 | Production Example 6 | Oil-based | 0.4 | 3 | 90 | 270 | Good | Reduction in concentration |
| Working Example 8 | Production Example 7 | Oil-based | 2 | 2 | 110 | 250 | Good | Good |
| Working Example 9 | Production Example 8 | Oil-based | 2 | 0.8 | 155 | 205 | Good | Good |
| Working Example 10 | Production Example 9 | Oil-based | 2 | 1.2 | 140 | 220 | Good | Good |
| Working Example 11 | Production Example 10 | Oil-based | 2 | 2.5 | 100 | 260 | Good | Good |
| Comparative example 1 | Production Example 4 | Oil-based | 2 | 0 | 180 | 180 | Formation defect | Good |

EP 3 165 474 A1

As can be seen from the results of Table 3, the labeled blow-molded container obtained by the present invention having convex portions and concave portions in the location where the label is affixed, so it is possible to provide the containers with a design. Character names, various characters, geometrical patterns, and the like can be used for this design. In addition, the convex portions and concave portions of the label face may also be used to prevent forgery or falsification. Furthermore, the convex portions and concave portions of the label face may also be utilized for slip resistance or for the purpose of making it easy to hold a bottle. In addition, the convex and concave shape of the label face may be changed in accordance with the type of the contents so as to transmit the type of the contents to a visually handicapped person.

The present invention was described in detail and with reference to specific embodiments, but it will be clear to a person skilled in the art that various modifications and amendments can be made without departing from the spirit and scope of the present invention. This application is based on Chinese Utility Model Application No. 201420361292.7 filed on July 1, 2014, and the content thereof is incorporated herein by reference.

Reference Signs List

| | |
|---|---|
| 1 | Label |
| 2 | Blow-molded container |
| 11 | Suction port |
| 12 | Exhaust port |
| 13 | Blowing air blow-inlet |
| 21, 21' | Blow molding mold |
| 22 | Concave portion (mold concave portion) |
| 23 | Convex portion (mold convex portion) |
| 101 | Convex portion |
| 102 | Concave portion |

**Claims**

1. A labeled blow-molded container comprising:

    a blow-molded container containing a thermoplastic resin; and
    a label containing a thermoplastic resin film,
    the labeled blow-molded container being formed by the blow-molded container being thermally fused to the label;
    a label face of the container to which the label is affixed having a convex portion and/or a concave portion; and
    a height difference h representing a distance between a highest part of the label surface and a lowest part of the label surface being not less than 0.3 mm using the label face as a reference in a height direction.

2. The labeled blow-molded container according to claim 1, wherein a maximum angle of inclination $\theta^1$ formed by the label face and a tangent of a side surface of the convex portion is not less than 85° and not greater than 170°.

3. The labeled blow-molded container according to claim 1 or 2, wherein a maximum angle of inclination $\theta^2$ formed by the label face and a tangent of a side surface of the concave portion is not less than 190° and not greater than 275°.

4. The labeled blow-molded container according to any one of claims 1 to 3, wherein a thickness of the label measured by method A of JIS K 7130:1999 is from 20 to 200 $\mu$m.

5. The labeled blow-molded container according to any one of claims 1 to 4, wherein the thermoplastic resin film is an unstretched film.

6. The labeled blow-molded container according to any one of claims 1 to 4, wherein the thermoplastic resin film is a biaxially stretched film.

7. The labeled blow-molded container according to any one of claims 1 to 6, wherein the label contains at least one layer formed from at least one resin selected from the group consisting of polyolefin-based resins and polyester-based resins.

8. The labeled blow-molded container according to any one of claims 1 to 7, wherein the thermoplastic resin contained in the blow-molded container is one or more resins selected from the group consisting of polyolefin-based resins, polyester-based resins, polycarbonate-based resins, and polystyrene-based resins.

9. The labeled blow-molded container according to any one of claims 1 to 8, wherein the label has printing information.

10. The labeled blow-molded container according to claim 9, wherein the printing information is formed by an oil-based ink or a radiation-curable ink.

11. The labeled blow-molded container according to claim 9 or 10, wherein the printing information is formed with an amount of ink of from 0.5 to 6 $g/m^2$ in terms of solid printing.

12. A blow molding mold having a cavity; the blow molding mold having a convex portion and/or a concave portion in a part of an inner wall surface of the mold in contact with the label; and a height difference H indicating a distance between a highest part of the inner wall surface and a lowest part of the inner wall surface being not less than 0.3 mm using a direction perpendicular to the inner wall surface as a reference in a height direction.

13. The blow molding mold according to claim 12, wherein the blow molding mold is used to form a labeled blow-molded container formed by a blow-molded container containing a thermoplastic resin being thermally fused to a label containing a thermoplastic resin film.

[FIG. 1]

[FIG. 2]

[FIG. 3]

[FIG. 4]

[FIG. 5]

## INTERNATIONAL SEARCH REPORT

| International application No. |
| --- |
| PCT/JP2015/069075 |

A.  CLASSIFICATION OF SUBJECT MATTER
*B65D1/02*(2006.01)i, *B65D1/00*(2006.01)i

According to International Patent Classification (IPC) or to both national classification and IPC

B.  FIELDS SEARCHED

Minimum documentation searched (classification system followed by classification symbols)
B65D1/02, B65D1/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2-139327 A  (Hiroshi UENO),<br>29 May 1990 (29.05.1990),<br>entire text; all drawings<br>(Family: none) | 1-9,12-13<br>5-11 |
| X<br>Y | WO 2005/054066 A1  (Dainippon Printing Co.,<br>Ltd.),<br>16 June 2005 (16.06.2005),<br>entire text; all drawings<br>& CN 1890156 A          & KR 10-2006-0115376 A<br>& TW 200520929 A | 1-4,12-13<br>5-11 |
| X<br>Y | JP 2012-18346 A  (Yoshino Kogyosho Co., Ltd.),<br>26 January 2012 (26.01.2012),<br>entire text; all drawings<br>(Family: none) | 1-4,12-13<br>5-11 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    17 August 2015 (17.08.15) | Date of mailing of the international search report<br>    25 August 2015 (25.08.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/069075

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2013-43935 A (Fujifilm Corp.), 04 March 2013 (04.03.2013), paragraphs [0004], [0021] (Family: none) | 10-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012180096 A
- JP 2011246194 A
- JP 2001048146 A
- CN 201420361292